# EUROPEAN PATENT APPLICATION

(11) **EP 2 208 602 A1**
(43) Date of publication of application: **21.07.2010**
(21) Application number: 10158834.1
(22) Date of filing: 15.11.2006
(51) Int. Cl.: B29C 45/56, C11D 17/04, B65D 65/46

(54) **Container from water-soluble polymer and method of ware washing**

(30) Priority: 16.11.2005 GB 0523336
(62) Divisional of application: 06808537.2
(71) Applicant: Beckitt Benckiser (UK) Limited, Slough, Berkshire SL1 3UH (GB)
(72) Inventor: Duffield, Paul John, Hull, HU8 7DS (GB); Hammond, Geoffrey Robert, Hull, HU8 0LG (GB); Wiedemann, Ralf, VE 30034, Mira (IT)
(74) Representative: Hodgetts, Catherine Dawn

(57) **Abstract**

The present invention provides a container formed from a water-soluble polymer, said container comprising a receptacle part having a base portion and at least one side wall portion, wherein the base portion has a mean thickness of 50 to 2000 microns and the thickness of the thinnest part of the base is at least 90% of the thickness of the thickest part of the base portion.

## Description

The present invention relates to a container formed from a water-soluble polymer, such as a poly(vinyl alcohol) or a cellulose ether. It also relates to a method of injection moulding an article from a water-soluble polymer.

It is known to package chemical compositions, such as laundry or dishwashing compositions, in water-soluble or water-dispersible materials, such as films. The package can simply be added to water in order to dissolve or disperse the contents of the package into the water.

Such water-soluble containers may be formed by thermoforming a water-soluble material. For example, WO 92/17382 discloses a package containing an agrochemical, such as a pesticide, comprising a first sheet of non-planar water-soluble or water-dispersible material and a second sheet of water-soluble or water-dispersible material superposed on the first sheet and sealed to it by a continuous closed water-soluble or water-dispersible seal along a continuous region of the superposed sheets.

Injection moulding may also be used to mould such water-soluble polymers (WO 01/36290). In conventional injection moulding, molten polymer is injected into a closed mould through one or more injection gates. High pressures are required to force the molten polymer through the mould cavity/channel, particularly when viscous polymers are employed. As the molten polymer flows through the mould, it solidifies/crystallises on the surface of the mould. This causes the polymer to thicken, restricting its ability to flow of polymer through the mould. As a result, it is difficult to achieve complete replication of the mould surface, particularly in the narrower regions of the mould.

The solidification/crystallisation of the polymer also increases the cycle times of the conventional injection moulding process. Because the thickened polymer restricts the flow of molten polymer through the mould, injection of the molten polymer cannot be achieved quickly, as extended injection times are required to force the thickened polymer through the mould. This adds significantly to production costs.

With certain polymers, the rapid crystallisation encountered in conventional injection moulding may give rise to undesirable properties in the moulded article. For example, crystalline poly(vinyl alcohol is difficult to seal and takes longer to dissolve in water.

One way of reducing the solidification/crystallisation of the molten polymer is to heat the mould prior to the injection step. Solidification/crystallisation of the polymer is likely to occur to a lesser extent when the molten polymer comes into contact with a hot mould surface. Thus, the molten polymer may be injected into the mould at a lower pressures. Heating the mould, however, increases overall cycle times, as it takes longer for the moulded polymer and mould parts to cool between each injection cycle.

According to a first aspect of the present invention, there is provided a container formed from a water-soluble polymer, said container comprising a receptacle part having a base portion and at least one side wall portion, wherein the base portion has a mean thickness of 50 to 2000 microns and the thickness of the thinnest part of the base is at least 90% of the thickness of the thickest part of the base portion.

Preferably, the base portion has a mean thickness of 80 to 1500 microns, more preferably 150 to 1000 microns, even more preferably 200 to 800 microns, for example 500 to 750 microns.

The base portion may be thinner than the at least one side portion. Alternatively, the base portion may be thicker or of substantially the same thickness as the at least one side wall portion.

The base portion may be of substantially uniform thickness. The thickness of the thinnest part of the base is at least 90% of the thickness of the thicker part of the base portion, preferably at least 95%, more preferably at least 98%, most preferably at least 99%.

The side wall(s) may be of substantially uniform thickness. The thickness of the thinnest part of the side wall may be at least 90% of the thickness of the thicker part of the side wall, preferably at least 95%, more preferably at least 98%, most preferably at least 99%.

The container may be of any size or shape for delivery of a water-destined ingredient, in particular selected from a washing, fabric care, surface care or dishwashing composition, a detergent, pesticide, biocide, deodorant, dye, pigment or water-treatment chemical, which container is made of a material that will dissolve in the intended aqueous destination site.

The container of the present invention comprises a receptacle part which holds the composition and a closure part, which may simply close the receptacle part or may itself have at least some receptacle function. The receptacle part preferably has side wall(s) which terminate at their upper end in an outward flange in which the closure part is sealingly secured, especially if the closure part is in the form of a film. The closure part may be secured by means of an adhesive but is preferably achieved by means of a seal, between the flange and the closure part. Heat sealing may be used or other methods such as infra-red, radio frequency, ultrasonic, laser, solvent, vibration or spin welding. An adhesive such as an aqueous solution of PVOH or a cellulose ether may also be used. The seal is desirably also water-soluble.

The closure part may itself be injection moulded or blow moulded. Preferably, however, it is a plastics film secured over the receptacle part. The film may, for example, comprise PVOH or a cellulose ether such as HPMC or another water-soluble polymer.

The container walls have thicknesses such that the containers are rigid. For example, the outside walls and any inside walls which have been injection moulded independently have a thickness of greater than 100µm, for example greater than 150µm or greater than 200µm, 300µm or 500µm. Preferably, the closure part is of a thinner material than the receptacle part. Thus, typically, the closure part is of thickness in the range 10 to 200 µm, preferably 50 to 100 µm, and the wall thickness of the receptacle part is in the range 300 to 1500 µm, preferably 500 to 1000 µm. The closure part may, however, also have a wall thickness of 300 to 1500 µm, such as 500 to 1000 µm.

Preferably, the closure part dissolves in water (at least to the extent of allowing the washing composition in the receptacle part to be dissolved by the water; and preferably completely) at 40°C in less than 5 minutes, preferably in less than 2 minutes.

The base portion or side wall(s) of the receptacle part and the closure part could be of the same thickness. To ensure that the closure part dissolves prior to the receptacle part, the closure part may be of a higher solubility than the receptacle part. Alternatively or additionally, the closure part may be thinner than the receptacle part to ensure that it dissolves prior to the receptacle part.

Preferably, the container is generally cuboid in its external shape, with the top wall being formed by the closure part, and with the side walls and base wall being formed by the receptacle part.

Preferably, the container is manufactured by forming an array of receptacle parts, preferably using the injection moulding method described above. Each receptacle part may be joined to adjacent receptacle parts, and separable from them by a snap or tear action. The array is preferably one which has columns and rows of the receptacle parts. The receptacle parts may be separated by frangible webs of the water-soluble polymer such as PVOH or a cellulose ether.

Alternatively, the receptacle parts may be manufactured with the aforementioned flanges, such that they are separated from each other by a line of weakness. For example the material may be thinner, and so able to be broken or torn readily. The thinness may be a result of the moulding process or, preferably, of a later scoring step.

In the manufacturing method, the array, formed by injection moulding, is fed to a filling zone, and all the receptacle parts are charged with, for example a washing composition.
A sheet of a water-soluble polymer such as PVOH or a cellulose ether may then be secured over the top of the array, to form the closure parts for all the receptacle parts of the array. The array may then be split up into the individual containers or containers, prior to packaging, or it may be left as an array, for packaging, to be split by the user. Preferably, it is left as an array, for the user to break or tear off the individual containers. Preferably, the array has a line of symmetry extending between containers, and the two halves of the array are folded together, about that line of symmetry, so that closure parts are in face-to-face contact. This helps to protect the closure parts from any damage, between factory and user. It will be appreciated that the closure parts are more prone to damage than the receptacle parts. Alternatively two identical arrays of washing containers may be placed together with their closure parts in face-to-face contact, for packaging.

In some embodiments of the invention the container, container or receptacle part may define a single compartment.

In other embodiments of the invention the container or receptacle part may define two or more compartments, which contain different products useful in a washing process. In such a situation a dividing wall or walls of the compartments preferably terminate at the top of the container, container or receptacle part i.e. in the same plane as the top edges of the side walls, so that when the receptacle part is closed by the closure part the contents of the compartments cannot mix. The container, container or receptacle part may be provided with an upstand, preferably spaced from the side walls thereof, and preferably of generally cylindrical shape. If wished, the remaining volume of the container or receptacle part can be divided into two or more parts by means of walls extending between the upstand and the side walls.

The container receptacle part or closure may be formed with an opening, for example a depression, formed in the side wall or the base wall, and preferably being open in the outward direction. That is to say, it preferably does not form part of the main volume defined by the container, container, receptacle part or closure. Preferably the opening is adapted to receive, in a press-fit manner, a solid block (for example a tablet) of a material useful in a washing process.

Preferably, the closure part is of a transparent or translucent material, so that the contents of the washing container can be seen.

Preferably, the container or receptacle part is of a transparent or translucent material, so that the contents of the washing container can be seen.

The washing composition within the container or receptacle part, or within a compartment thereof, need not be uniform. For example during manufacture it could be fed first with a settable agent, for example a gel, useful in a washing process, and then with a different material. The first material could dissolve slowly in the washing process so as to deliver its charge over a long period within the washing process. This might be useful, for example, to provide immediate, delayed or sustained delivery of a softening agent in a clothes washing container or a receptacle part.

The container may, for example, be in at least two parts (a body part and a cap part) which fit tightly, and preferably sealingly and inseparably, together to form a compartment in which is stored the ingredient to be achieved. In one example, the container may have three parts - a body such as a receptacle, a first cap, and then a second cap to fit over the closed end of either the body or the first cap, so as to result in a container with two separate compartments. Where there are three such parts (or more); four parts - a body and three caps - make three compartments, and so on), then naturally the ingredients in each compartment may be the same or they may be different.

In all embodiments of the present invention one compartment may contain, for example, a solid component (such as a powder, granules or a compressed or gelled tablet) and another may contain a different solid component (such as a powder, granules or a compressed or gelled tablet). Alternatively, more than one component may be present in one or more compartments. For example a compartment may contain a solid component, for example in the form of a ball or pill (such as a powder, granules or a compressed or gelled tablet), and a liquid component.

By using container, receptacle closure parts of different thicknesses, or of different polymers, or both, such as PVOH polymers with different degrees of hydrolysis, this invention enables enhanced control over the release of different ingredients at different times or in different positions within broad scope of the aqueous destination.

The container can be of any size or shape. It is, for example, conveniently of the standard container shape - an elongate tubular package with closed, rounded ends. Moreover, although it is possible to have the several parts of much the same sizes, it is usual that there will be a long body with a shorter cap (the cap may be half or a quarter the length of the body). Typically, the container has an overall closed length of 2 to 10 cm, such as 4 to 6 cm, and an external diameter of 2 to 4 cm. However, it should be understood that there is no theoretical limitation, in either size or shape, and what is suitable will normally be decided upon the basis of the "dose" of the container's contents, the size of any aperture the container may have to pass through, and the available means of delivery.

The container may be in at least two parts (a body or receptacle part and a cap part) which fit tightly, and preferably sealingly and inseparably, together. The actual joining of the parts can be carried out in any convenient way, but advantage can be taken of the very nature of the container material - that fact that it is one that can be injection-moulded (it is a thermoplastic). Thus, the preferred joining method is welding, for example either heat welding, by melting the parts when they are in contact, and allowing them to "run" into each other and then cool and solidify to become an integral device, or solvent welding, where much the same effect is achieved by partially dissolving the adjacent portions of the container and letting them again run into each other and then solidify to form a whole. Heat welding is much the preferred way, although any of the sealing techniques described herein may be used.

PVOH materials are particularly suited to thermal welding, a convenient variety of this technique being laser welding, though any suitable method can be used providing it does indeed make a permanent weld with the polymer used to form the container. Some other common methods are infra-red (IR), radio frequency (RF), and ultrasonic welding.

Some of these methods may require the addition of other items or processes to ensure their correct operation. For example, RF welding may require the use of a metal (normally aluminium) conductor in content with the container surface. Laser welding will normally require the top surface to be transparent to the laser used, and the lower surface to be opaque to it. This can be achieved by avoiding opaque coatings and fillers on the outer surface of the container cap and by their application to the outer surface of the container body. For example, a circumferential line of a suitable material can be printed around the body at the required joining point to facilitate the weld at that point.

Of the various methods, the laser weld is preferred as there is no direct contact required, and it can achieve the very high production speeds required.

After placing the intended contents in the receptacle part or body, and putting the cap on the body, the two portions of the container can be welded - by means of a laser beam, say - into a single unit which cannot thereafter readily and without leaving visible traces be separated into body and cap in order to gain access to the contents.

Accordingly, any attempt to tamper with the contents would be clearly obvious.

The two parts of the container that are to be welded together are, for example, made so that the open end of one will pass into the open end of the other with the smallest gap that can be practically achieved to allow easy assembly. Normally, but not necessarily, the container is designed with a stop on one or other component so that the entry of one into the other cannot overrun and stops at the same fixed position in every case.

The two parts of the container that are to be moulded together are in the closed position when the entire periphery of the open end of one is overlapped by the periphery of the open end of the other. The closed container is then ready for welding, and this is done by bringing the container into close proximity to the welding head. This distance will vary with the method of welding chosen. The welding equipment is operated, and forms a weld between the two layers in contact in the form of a line of weld in a closed loop around the periphery of the container. This an be achieved either by having the welding heads in the form of a ring (which may be continuous or made up of a number of discrete heads), or by rotating one or other of the container and the head around the other - say, by rolling the container past the head. The exact method will depend on the welding technology chosen.

It is also possible to use solvent welding - that is, using a solvent for the chosen injection-mouldable material so as to soften and render flowable the surface layers of the material where the two parts are in contact. In the PVOH case the solvent is conveniently water or an aqueous electrolyte solution (typically containing an alkali metal halide such as lithium chloride as the electrolyte). This technique, however, requires another stage to the welding process, in which the solvent is applied to one of the surfaces to be in contact before the two shells are closed. This method is not preferred, however, as it is likely to be comparatively slow, and the addition of water and solute may well be detrimental to the ingredient(s) or other preparations contained within the container.

Due to the integrity of the welded seal, in all embodiments the container or receptacle can be filled with any appropriate powder, liquid, gel, or oil.

The invention provides a container made of a water-soluble polymer that can be injection-moulded, preferably using the injection moulding process of the present invention. The injection-moulding process of the present invention allows controlled variations in the thickness of the walls of the container, thereby allowing the release characteristics to be infinitely varied. The use of such moulded container permits the development of container formulations containing controlled-release beads or granules which can be determined where the contents are released so that the system as a whole can be made to deliver its contents at the desired position, rate and period of release irrespective of differing physio-chemical properties of the contents.

The container, receptacle or closure may, for example, have raised portions moulded into its external surface.

The raised portions - for the most part they are referred to hereinafter as "raised", though obviously the effect of a raised part can be achieved by lowering the other parts - can be in the form of short, small pimple-like projections, or they can be ribs that extend wholly or partially either around or along the container. The portions may be designed to include or act as markings allowing identification of the container and its contents - either visually, by the sighted, or tactilely, by the visually-impaired, or even by a machine or reader. Thus a code can be moulded into the surface so that a filled container can be identified at all stages of its life - by the manufacturer for quality assurance and quality control, by a wholesaler or retailer as part of a stock-control system, and by the user before utilisation, particularly those with vision impairment.

The surface of the container, receptacle or closure needs no pre-treatment prior to printing.

By suitable cutting of the moulds used, any required pattern can be moulded into the surface, either raised or incuse. Both raised and incuse variants bring different properties to the container, and the benefits of each are described hereinafter. The complexity of the pattern is limited only by the practical limitations on mould making.

The use of an incuse pattern has a number of interesting possibilities. For example, it can help determine the time of release of the container's contents. Such an incuse pattern design may include a container, for example of standard elongate form but with relatively thick walls. However a container or receptacle of any shape may be used. Around the centre section of the container base, or any other part of the container or receptacle, is moulded a number, for example an array, of thin-walled incuse panels. Once the container or receptacle has reached its intended destination, the thin-walled panels in the body quickly dissolve, leaving the body with a structure of holes, for example in the form of a grid. These holes can be small enough to prevent the internal contents leaving the body, but large enough to allow the dissolving medium to enter and make contact with the contents. As has been described earlier, PVOH materials, due to variations in molecular weight and extent of hydrolysis, or other materials such as cellulose ethers, can be selected to dissolve at different speeds and at different temperatures in aqueous conditions. Hence, by varying the thickness and the dissolution characteristics of the injection-moulded container materials, the body of the container or receptacle may be designed to dissolve or break up at a chosen rate.

Another possibility is to mould a container or receptacle in a relatively sparingly-soluble polymer material - such as a high molecular weight PVOH having a high degree of hydrolysis - with a similar array of holes (rather than thin-walled soluble panels), and then in a separate process, after filling and capping, to cover the area containing the holes with a relatively soluble polymer either by spraying or by shrinking or gluing a soluble sleeve thereover. The relatively-sparingly soluble polymer used in this case could even be an insoluble polymer, provided, of course, that it is injection-mouldable.

Another consequence of using an injection-moulding method is that the mouldable material may easily include one or more additional substance that has some effect on the way the container behaves in use - for instance, on its rate of dissolution.

Thus, in still another aspect the invention provide a container, for example, relatively-large injection-moulded container, receptacle or closure that is made from an injection-mouldable material that contains one or more particulate solid in order to accelerate the rate of dissolution of the container. This solid may also be present in the contents of the receptacle or container.

The simple dissolution of the solid in the chosen medium is sufficient to cause a significant acceleration in the container break-up, particularly so if a gas is also generated, when the physical agitation caused will result in the virtually immediate release of the contents from the container.

Suitable solids for this purpose are the bicarbonate and carbonate salts of the alkali and alkaline-earth metals, typically sodium, potassium, magnesium and calcium.

The solid is very preferably extremely finely divided, typical particle sizes being the range 1 to 25 µm, and preferably 5 to 10 µm.

Other materials that can be utilised to affect the container's dissolution rate are most preferably solid acidic substances with carboxylic or sulphonic acid groups or salts thereof. Substances suitable for this purpose are cinnamic acid, tartaric acid, mandelic acid, fumaric acid, maleic acid, malic acid, pamoic acid, citric acid and naphthalene disulphonic acid, as free acids or as their alkali or alkaline-earth metal salts, with tartaric acid, citric acid, and cinnamic acid in the form of acids or their alkali metal salts being especially preferred.

The container of the present invention may contain any composition which is intended to be released when the container is placed in an aqueous environment.

Thus it may, for example, contain a fabric care, surface care or dishwashing composition. A fabric care composition is any composition which is used in the field of fabric care, such as in a fabric washing, fabric treating or dyeing process. A surface care composition is any composition which is used in the field of surface care, for example to clear, treat or polish a surface. Suitable surfaces are, for example, household surfaces such as worktops, as well as surfaces of sanitary ware, such as sinks, basins and lavatories. A dishwashing composition is any composition which is used in the field of dishwashing, such as a dishwashing, water-softening or rinse aid composition.

Examples of such compositions are a dishwashing, water-softening, laundry, detergent and rinse-aid compositions.
In this case the composition is especially suitable for use in a domestic washing machine such as a clothes washing machine or dishwashing machine. Other examples are disinfectant, antibacterial and antiseptic composition, for example those intended to be diluted with water before use, or a concentrated refill composition, for example for a trigger-type spray used in domestic situations. Such a composition can simply be added to water already held in the spray container.

The container may be used to contain any composition. Desirably the composition has a mass of at least 15 g, for example, from 15 g to 100 g, especially from 15 g to 40 g.
For example, a dishwashing composition may weigh from 15 to 20 g, a water-softening composition may weigh from 25 to 35 g, and a laundry composition may weigh from 30 to 40 g.

The container may also contain, for example, a detergent, pesticide, biocide, deodorant, dye, pigment or water-treatment chemical. It may, for example, deliver detergents or water-treatment chemicals to a washing machine.

In general, particularly when used in a domestic environment, the maximum dimension of the container is 5 cm. For example, a cuboid container may have a length of 1 to 5 cm, especially 3.5 to 4.5 cm, a width of 1.5 to 3.5 cm, especially 2 to 3 cm, and a height of 1 to 2 cm, especially 1.25 to 1.75 cm.

The composition contained by the container may be, for example, any which is suitable for the designated application, for example a clothes washing or dishwashing application.
It may be a powder or a liquid but if a liquid, may be a low water formulation, preferably having a maximum water content of 5 wt%, in order to maintain the integrity of the walls of the container or a higher water formulation containing, for example, at least 8 wt% water. The composition may be formulated having regard to the fact that the user will not come into contact with the composition, whether by inhalation or by skin contact. For example, the composition may include an enzyme, without concern about physical contact between the composition containing the enzyme, and the user.

If the container contains an aqueous liquid having a relatively high water content, it may be necessary to take steps to ensure the liquid does not attack the water-soluble polymer if it is soluble in cold water (20°C), or water at a temperature of up to, say, 35°C. Steps may be taken to treat the inside surfaces of the container, for example by coating it with agents such as PVC (poly(vinyl chloride))or PTFE (polytetrafluoroethylene), or to adapt the composition to ensure that it does not dissolve the polymer. For example, it has been found that ensuring the composition has a high ionic strength or contains an agent which minimises water loss through the walls of the container will prevent the composition from dissolving the polymer from the inside. This is described in more detail in EP-A-518,689 and WO 97/27743.

The composition held within the container depends, of course, on the intended use of the composition. It may, for example, contain surface active agents such as an anionic, non-ionic, cationic, amphoteric or zwitterionic surface active agent or mixture thereof.

Examples of anionic surfactants are straight-chained or branched alkyl sulfates and alkyl polyalkoxylated sulfates, also known as alkyl ether sulfates. Such surfactants may be produced by the sulfation of higher C₈-C₂₀ fatty alcohols.

Examples of primary alkyl sulfate surfactants are those of formula:

ROS0₃⁻M⁺

wherein R is a linear C₈-C₂₀ hydrocarbyl group and M is a water-solubilising cation. Preferably R is C₁₀-C₁₆ alkyl, for example C₁₂-C₁₉, and M is alkali metal such as lithium, sodium or potassium.

Examples of secondary alkyl sulfate surfactants are those which have the sulfate moiety on a "backbone" of the molecule, for example those of formula:

CH₂(CH₂)ₙ(CHOSO₃⁻M⁺) (CH₂)ₘCH₃

wherein m and n are independently 2 or more, the sum of m+n typically being 6 to 20, for example 9 to 15, and M is a water-solubilising cation such as lithium, sodium or potassium.

Especially preferred secondary alkyl sulfates are the (2,3) alkyl sulfate surfactants of formulae:

CH₂(CH₂)ₓ(CHOSO₃⁻M⁺)CH₃ and

CH₃(CH₂)ₓ(CHOSO₃⁻M⁺)CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.

Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt-forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium, potassium or alkanolammonium salts, and alkyl, for example C₈-C₁₈, benzene sulfonates.

Examples of nonionic surfactants are fatty acid alkoxylates, such as fatty acid ethoxylates, especially those of formula:

R(C₂H₄O)ₙOH

wherein R is a straight or branched C₈-C₁₆ alkyl group, preferably a C₉-C₁₅, for example C₁₀-C₁₄, or C₁₂-C₁₄ alkyl group and n is at least 1, for example from 1 to 16, preferably 2 to 12, more preferably 3 to 10.

The alkoxylated fatty alcohol nonionic surfactant will frequently have a hydrophilic-lipophilic balance (HLB) which ranges from 3 to 17, more preferably from 6 to 15, most preferably from 10 to 15.

Examples of fatty alcohol ethoxylates are those made from alcohols of 12 to 15 carbon atoms and which contain about 7 moles of ethylene oxide. Such materials are commercially marketed under the trademarks Neodol 25-7 and Neodol 23-6.5 by Shell Chemical Company. Other useful Neodols include Neodol 1-5, an ethoxylated fatty alcohol averaging 11 carbon atoms in its alkyl chain with about 5 moles of ethylene oxide; Neodol 23-9, an ethoxylated primary C₁₂-C₁₃ alcohol having about 9 moles of ethylene oxide; and Neodol 91-10, an ethoxylated C₉-C₁₁ primary alcohol having about 10 moles of ethylene oxide.

Alcohol ethoxylates of this type have also been marketed by Shell Chemical Company under the Dobanol trademark. Dobanol 91-5 is an ethoxylated C₉-C₁₁ fatty alcohol with an average of 5 moles ethylene oxide and Dobanol 25-7 is an ethoxylated C₁₂-C₁₅ fatty alcohol with an average of 7 moles of ethylene oxide per mole of fatty alcohol.

Other examples of suitable ethoxylated alcohol nonionic surfactants include Tergitol 15-S-7 and Tergitol 15-S-9, both of which are linear secondary alcohol ethoxylates available from Union Carbide Corporation. Tergitol 15-S-7 is a mixed ethoxylated product of a C₁₁-C₁₅ linear secondary alkanol with 7 moles of ethylene oxide and Tergitol 15-S-9 is the same but with 9 moles of ethylene oxide.

Other suitable alcohol ethoxylated nonionic surfactants are Neodol 45-11, which is a similar ethylene oxide condensation products of a fatty alcohol having 14-15 carbon atoms and the number of ethylene oxide groups per mole being about 11. Such products are also available from Shell Chemical Company.

Further nonionic surfactants are, for example, C₁₀-C₁₈ alkyl polyglycosides, such s C₁₂-C₁₆ alkyl polyglycosides, especially the polyglucosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

Examples of amphoteric surfactants are C₁₀-C₁₈ amine oxides and the C₁₂-C₁₈ betaines and sulfobetaines.

The total content of surfactants in the laundry or detergent composition is desirably 60 to 95 wt%, especially 75 to 90 wt%. Desirably an anionic surfactant is present in an amount of 50 to 75 wt%, the nonionic surfactant is present in an amount of 5 to 20 wt%, the cationic surfactant is present in an amount of from 0 to 10 wt% and/or the amphoteric surfactant is present in the amount of from 0 to 10 wt%. These amounts are based on the total solids content of the composition, i.e. excluding the water when present.

Dishwasher compositions usually comprise a detergency builder. Suitable builders are alkali metal or ammonium phosphates, polyphosphates, phosphonates, polyphosphonates, carbonates, bicarbonates, borates, polyhydroxysulfonates, polyacetates, carboxylates such as citrates and other polycarboxylates. The builder is desirably present in an amount of up to 90 wt%, preferably 15 to 90 wt%, more preferably 15 to 75 wt%, relative to the total weight of the composition. Further details of suitable components are given in, for example, EP-A-694,059, EP-A-518,720 and WO 99/06522.

The compositions, particularly when used as laundry washing or dishwashing compositions, may also comprise enzymes, such as protease, lipase, amylase and cellulase enzymes. Such enzymes are commercially available and sold, for example, under the registered trade marks Esperase, Alcalase, Savinase, Termamyl, Lipolase and Celluzyme by Nova Nordisk A/S. Desirably the enzymes are present in the composition in an amount of from 0.5 to 3 wt%, especially 1 to 2 wt%.

The compositions may, if desired, comprise a thickening agent or gelling agent. Suitable thickeners are polyacrylate polymers such as those sold under the trade mark CAR-BOPOL, or the trade mark ACUSOL by Rohm and Hass Company. Other suitable thickeners are xanthan gums. The thickener, if present, is generally present in an amount of from 0.2 to 4 wt%, especially 0.2 to 2 wt%.

The compositions can also optionally comprise one or more additional ingredients. These include conventional detergent composition components such as further surfactants, bleaches, bleach enhancing agents, builders, suds boosters or suds suppressors, anti-tarnish and anti-corrosion agents, organic solvents, co-solvents, phase stabilisers, emulsifying agents, preservatives, soil suspending agents, soil release agents, germicides, phosphates such as sodium tripolyphosphate or potassium tripolyphosphate, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute no more than 10 wt%, for example from 1 to 6 wt%, the total weight of the compositions.

The builders counteract the effects of calcium, or other ion, water hardness encountered during laundering or bleaching use of the compositions herein. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark Dequest and alkylhydroxy phosphonates. Citrate salts and C₁₂-C₁₈ fatty acid soaps are preferred.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark Sokalan.

The builders generally constitute from 0 to 3 wt%, more preferably from 0.1 to 1 wt%, by weight of the compositions.

Compositions which comprise an enzyme may optionally contain materials which maintain the stability of the enzyme. Such enzyme stabilizers include, for example, polyols such as propylene glycol, boric acid and borax. Combinations of these enzyme stabilizers may also be employed. If utilized, the enzyme stabilizers generally constitute from 0.1 to 1 wt% of the compositions.

The compositions may optionally comprise materials which serve as phase stabilizers and/or co-solvents. Example are C₁-C₃ alcohols or diols such as methanol, ethanol, propanol and 1,2-propanediol. C₁-C₃ alkanolamines such as mono-, di- and triethanolamines and monoisopropanolamine can also be used, by themselves or in combination with the alcohols.

If the composition is in liquid form, it may be anhydrous, or, for example, contain up to 5 wt% water. Aqueous compositions generally contain greater than 8 wt% water based on the weight of the aqueous composition. Desirably the aqueous compositions contain more than 10 wt%, 15 wt%, 20 wt%, 25 wt% or 30 wt% water, but desirably less than 80 wt% water, more desirably less than 70 wt%, 60 wt%, 50 wt% or 40 wt% water. They may, for example, contain from 30 to 65 wt% water.

The compositions may optionally comprise components which adjust or maintain the pH of the compositions at optimum levels. Examples of pH adjusting agents are NaOH and citric acid. The pH may be from, for example, 1 to 13, such as 8 to 11 depending on the nature of the composition. For example, a dishwashing composition desirably has a pH of 8 to 11, a laundry composition desirably has a pH of 7 to 9, and a water-softening composition desirably has a pH of 7 to 9.

The composition, such as a washing composition within the container or receptacle part, or within a compartment thereof if there is more than one compartment, need not be uniform. For example during manufacture it could be fed first with a settable agent, for example a gel, useful in a washing process, and then with a different material. The first material could dissolve slowly in the washing process so as to deliver its charge over a long period within the washing process. This might be useful, for example, to provide delayed or sustained delivery of a softening agent in a clothes washing container.

The composition, such as a washing composition may, especially for dishwashing or laundry, include a tablet. Preferably a tablet contains a material useful in a washing process and is formulated to provide slow release of that material during a washing process and/or delayed release thereof. Delayed release may be achieved by providing the tablet with a coating which is slow to dissolve during the washing process. Alternatively the tablet may provide a quick release of components required early in the wash, for example water-softening components and/or enzymes. The tablet may, for example, comprise a disrupting agent, such as one which effervesces when in contact with water such as a combination of citric acid and an alkali metal carbonate or bicarbonate.

A tablet may be provided in the main volume of the receptacle part or may be provided in an outwardly facing opening or depression, as previously described.

When a washing container of the invention has a tablet retained in an outwardly facing opening or depression the tablet is preferably one which will not transfer any washing composition to the hands of a user. For example, it may be coated with a soluble polymeric material. As mentioned above, this may also be desirable for delayed release of its charge. If it is desired that the tablet dissolves quickly it may, for example, comprise a disrupting agent such as an effervescing agent.

According to the present invention, there is also provided a method of injection moulding an article from a water-soluble polymer, said method comprising:
providing a mould comprising a male portion and a female portion defining a mould cavity, said portions being movable relative to one another to vary the volume of the mould cavity,
injecting molten water-soluble polymer into the mould when the male portion and female portion are in a first position, and
initiating relative movement of the male portion and female portion to reduce the volume of the mould cavity so as to force the molten water-soluble polymer already in the mould cavity into at least part of the remainder of the mould.

The method of the present invention is used to mould articles from water-soluble polymers that at least partially dissolve and/or disperse in water. Suitable polymers include poly(vinyl alcohols) [PVOH] and/or cellulose ethers/esters (e.g. HPMC). Other water-soluble compounds may also be used, such as polyglycolides, gelatine, polylactides, polylactic acid, polylactide-polyglycolide copolymers, polymaleic acid and polymaleic esters. Water-soluble polyvinylpyrrolidones, polyethylene oxides, acrylic acid polymers, polyacrylamides, oxazoline polymers, polystyrene-sulfonates, polyurethanes, polyesters and/or polyethers may also be employed. Suitable polymers are described in WO 01/36290 and US 2004/0029764.

In the method of the present invention, a mould comprising a male portion and a female portion is employed. The male portion and female portion define a mould cavity into which molten polymer may be introduced. The male portion and female portion of the mould are movable relative to one another. Thus, by moving the male portion relative to the female portion, the volume of the mould cavity may be altered.

When the male portion and female portion are in a first position, molten water-soluble polymer is injected into the mould. As the mould is not fully closed when injection is initiated, relatively low pressures may be used to introduce the molten polymer into the mould. For example, the molten polymer may be injected at a pressure of from 1 to 10,000 psi, preferably 50 to 2000 psi, for example 100 to 1000 psi. Moreover, as the molten polymer is injected through a relatively confined space (i.e. mould is partially open), injection times may be reduced, reducing the risk of solidification of the polymer during the injection step.

The molten polymer is preferably introduced into the mould at high speeds. For example, the mould may be filled in less than 5 seconds, preferably less than 1 second, more preferably less than 0.6 seconds, even more preferably less than 0.4 seconds, most preferably less than 0.2 seconds. High speeds of injection are desirable to avoid solidification during the injection step.

The molten polymer may form a reservoir or billet in the mould cavity. The male portion and female portion are then moved relative to one another to reduce the volume of the mould. This compression step forces the molten polymer into at least part of the remainder of the mould. For example, the billet of molten polymer may be forced into a region defined by the side wall(s) of the male portion and inside wall(s) of the female portion of the mould. By compressing the molten polymer in this way, greater control over the thickness of the polymer may be achieved. Moreover, the male portion and female portion may be configured to ensure that the molten polymer is compressed to a substantially uniform thickness. Advantageously, therefore, the method of the present invention may be used to mould articles having walls or wall portions of a substantially uniform thickness.

The amount of molten polymer introduced into the mould will vary depending on the size and shape of the article to be moulded. In an embodiment of the invention, an array of moulds may be provided. The moulds in the array may be injected with molten polymer form a single source, or from a plurality of, for example individual, sources of polymer.
In one embodiment of the invention, 50 to 300 g, preferably 60 to 200g, more preferably 70 to 150 g of polymer, even more preferably 80 to 100 g of polymer are introduced into the mould or mould array in a single moulding cycle. This injection step may be completed in less than 1 second, preferably less than 0.6 seconds, more preferably less than 0.4 seconds, most preferably less than 0.2 seconds. High speeds of injection are desirable to avoid solidification during the injection step.

In one embodiment of the present invention, the injection step is completed before the male portion and female portion are moved relative to one another to reduce the volume of the mould. Preferably, however, compression of the male portion and female portion is initiated within 1 second of completion of the injection step. More preferably, the compression step is initiated less than 0.5 seconds, even more preferably less than 0.3 seconds after completion of the injection step. It is desirable to compress the polymer whilst it is in the molten state.

Once the male portion and female portion have been moved relative to one another to compress the molten polymer already in the mould, further molten polymer may be introduced into the mould, for example, by injection.

Injection moulding techniques that may be used in the present invention are described in WO 2005/068157, US 2004/0109919 and EP-B-1,360,057.

Preferably, the method of the present invention is used to form a container. Suitable containers include water-soluble containers for washing, fabric care, dishwashing, water-softening, laundry, rinse aid, anti-bacterial, anti-septic compositions and/or a refill compositions for a trigger-type spray. Accordingly, the method of the present invention additionally includes the step of introducing a washing, fabric care, dishwashing, water-softening, laundry, rinse aid, anti-bacterial, anti-septic compositions and/or a refill compositions for a trigger-type spray into the moulded container and sealing the container.

The container may be sealed by a water-soluble closure part. The closure part preferably comprises a poly(vinyl alcohol) and/or a cellulose ether. Alternatively or additionally, other water-soluble compounds may be used, such as polyglycolides, gelatine, polylactides and polylactide-polyglycolide copolymers. The water-soluble polymers mentioned in the paragraph below may also be suitable.

Any suitable water-soluble polymer may be used in the injection moulding process of the present invention. Suitable polymers include poly(vinyl alcohols) [PVOH], polyvinyl pyrollidone, partially hydrolysed polyvinyl acetate, polyvinyl acetate, polymeric carboxylic acid, polycarboxylate, sulphonated polymers, polyamines and/or cellulose ethers/esters (e.g. hydroxyporpyl cellulose (HPMC)). Other water-soluble compounds may also be used, such as polyglycolides, gelatine, polylactides, polylatic acids, polylactide-polyglycolide copolymers, polymaleic acids and polymaleic esters. Water-soluble polyethylene oxides, acrylic acid polymers, polyacrylamides, oxazoline polymers, polystyrene-sulfonates, polyurethanes, polyesters and/or polyethers may also be employed. Suitable polymers are described in WO 01/36290 and US 2004/0029764. Homopolymers or copolymers may be employed. Poly (vinyl alcohol) is preferred.

The PVOH used in the present invention may be partially or fully alcoholised or hydrolysed, for example it may be from 40-100%, preferably 70-92 %, more preferably about 88%, alcoholised or hydrolysed polyvinylacetate. The PVOH or cellulose ether is generally cold water (20°C) soluble, but may be insoluble in cold water at 20°C and only become soluble in warm water or hot water having a temperature of, for example, 30°C, 40°C, 50°C or even 60°C. This parameter is determined in the case of PVOH by its degree of hydrolysis.

In order to ensure that the water-soluble polymer is capable of being injection moulded, it is usual to incorporate components such as plasticizers and mould release agents in an amount of up to, for example, 15 wt% of the composition. Suitable plasticizers are, for example, pentaerthyritol such as depentaerythritol, sorbitol, mannitol, glycerine and glycols such as glycerol, ethylene glycol and polyethylene glycol.

Solids such as talc, stearic acid, magnesium stearate, silicon dioxide, zinc stearate, and colloidal silica may also be used. A preferred PVOH which is already in a form suitable for injection moulding is sold in the form of granules under the name CP1210T05 by Soltec Developpement SA of Paris, France.

For the avoidance of doubt, the components above may be included in any of the water-soluble polymers mentioned above as processing acids for the injection moulding process

The water-soluble polymer may be moulded at temperatures of less than 250°C, preferably 50 to 220°C, more preferably 80 to 180°C. An advantage of the present invention is that the water-soluble polymer does not need to be fully molten during the injection step. Without wishing to be bound by ay theory, this is believed to be because the molten polymer is injected into a partially open mould, and then subsequently forced around the mould to fill the available space by compression. This compressive force (or impact) may be sufficient to force a softened polymer throughout the mould cavity. Accordingly complete melting of the polymer may not be necessary. This may be particularly advantageous when moulding certain polymers, particularly those that are sensitive to heat, such as PVOH.

The method of the present invention may be used to mould articles, such as the containers described above.

In accordance with a further aspect of the invention there is provided a method of ware washing, comprising use of a container, receptacle or washing container as described and defined above, the method entailing introducing the container, receptacle or washing container into a ware washing machine such as a laundry washing machine or dishwashing machine, prior to commencement of the washing process, the container, receptacle or washing container being entirely consumed during the washing process.

## Claims

1. A container formed from a water-soluble polymer, said container comprising a receptacle part having a base portion and at least one side wall portion, wherein the base portion has a mean thickness of 50 to 2000 microns and the thickness of the thinnest part of the base is at least 90% of the thickness of the thickest part of the base portion.

2. A container as claimed in Claim 2, which further comprises a water-soluble closure part that is sealingly joined to the receptacle part.

3. A container as claimed in either one of Claims 1 or 2, which contains a washing, fabric care, dishwashing, water-softening, laundry, rinse aid, anti-bacterial, anti-septic composition and/or a refill composition for a trigger-type spray.

4. A container as claimed in claim 3, wherein the composition has a mass of 15 to 40 g.

5. A container as claimed in any one of Claims 1 to 4, wherein the water-soluble polymer comprises a poly(vinyl alcohol) and/or a cellulose ether.

6. A container as claimed in any one of Claims 1 to 5, which is an injection moulded container.

7. A container as claimed in any one of Claims 1 to 6, wherein the base portion has a mean thickness that is less than the mean thickness of the side wall(s).

8. A method of ware washing, comprising use of a container as claimed in any one of Claims 1 to 7, the method comprising introducing the container into a ware washing machine prior to commencement of the washing process and the container being entirely consumed during the washing process.
